(19) **Europäisches Patentamt**

**European Patent Office**

**Office européen des brevets**

(11) **EP 1 372 832 B1**

(12) **EUROPÄISCHE PATENTSCHRIFT**

(45) Veröffentlichungstag und Bekanntmachung des Hinweises auf die Patenterteilung:
**02.08.2006 Patentblatt 2006/31**

(21) Anmeldenummer: **01978441.2**

(22) Anmeldetag: **19.10.2001**

(51) Int Cl.:
*B01D 69/12* (2006.01)  *B01D 71/02* (2006.01)
*B01D 53/22* (2006.01)  *C04B 41/50* (2006.01)
*D01F 9/14* (2006.01)

(86) Internationale Anmeldenummer:
**PCT/EP2001/012131**

(87) Internationale Veröffentlichungsnummer:
**WO 2002/032558 (25.04.2002 Gazette 2002/17)**

(54) **FLEXIBLE, PORÖSE MEMBRANEN UND ADSORBENTIEN UND VERFAHREN ZU DEREN HERSTELLUNG**

FLEXIBLE AND POROUS MEMBRANES AND ADSORBENTS, AND METHOD FOR THE PRODUCTION THEREOF

MEMBRANES ET ADSORBANTS SOUPLES ET POREUX, PROCEDE PERMETTANT DE LES PRODUIRE

(84) Benannte Vertragsstaaten:
**AT BE CH CY DE DK ES FI FR GB GR IE IT LI LU MC NL PT SE TR**

(30) Priorität: **19.10.2000 DE 10051910**

(43) Veröffentlichungstag der Anmeldung:
**02.01.2004 Patentblatt 2004/01**

(73) Patentinhaber: **Blue Membranes GmbH**
**65203 Wiesbaden (DE)**

(72) Erfinder:
• **Noack, Andreas**
 **55130 Mainz (DE)**
• **Kunstmann, Jürgen**
 **65812 Bad Soden (DE)**
• **Bischofberger, Norman**
 **65183 Wiesbaden (DE)**
• **Gerald, Frank**
 **63303 Dreiech (DE)**
• **Ban, Andreas**
 **56068 Koblenz (DE)**
• **Gnabs, Christian**
 **65779 Kelkheim (DE)**

(74) Vertreter: **Maiwald Patentanwalts GmbH**
**Elisenhof,**
**Elisenstrasse 3**
**80335 München (DE)**

(56) Entgegenhaltungen:
**US-A- 3 446 593**   **US-A- 4 759 977**

• **DATABASE WPI Section Ch, Week 199952 Derwent Publications Ltd., London, GB; Class A85, AN 1999-603671 XP002184573 & JP 11 240779 A (TOKAI CARBON KK), 7. September 1999 (1999-09-07)**
• **DATABASE WPI Section Ch, Week 199335 Derwent Publications Ltd., London, GB; Class A14, AN 1993-278112 XP002184574 & JP 05 194056 A (OJI PAPER CO), 3. August 1993 (1993-08-03)**
• **DATABASE WPI Section Ch, Week 198609 Derwent Publications Ltd., London, GB; Class A35, AN 1986-059869 XP002184575 & JP 61 012918 A (OJI PAPER CO), 21. Januar 1986 (1986-01-21)**

EP 1 372 832 B1

## Beschreibung

Die vorliegende Erfindung betrifft flexible, poröse Membranen und Adsorbentien für die Anwendung in Gastrennverfahren und dergleichen, Verfahren zu deren Herstellung und damit herstellbare poröse, flexible Materialien.

Flüssige, gasförmige und dampfförmige Fluidgemische können an Membranen aufgetrennt werden. Hierbei wird mindestens eine Komponente des Fluidgemisches von der Membran zurückgehalten und als sogenanntes Retentat abgeführt, wohingegen mindestens eine weitere Komponente des Fluidgemisches in der Lage ist, durch die Membran hindurchzutreten und als Permeat auf der anderen Seite dieser Membran aufzutreten und abgeführt zu werden

Je nach Art des aufzutrennenden Stoffgemisches werden verschiedenartige Membranwerkstoffe verwendet. Diese umfassen hochmolekulare, meist für die Trennaufgabe passend hergestellte abgewandelte Naturprodukte, Synthesepolymere und Sondermaterialien wie beispielsweise Celluloseacetate, -butyrate und -nitrate, Polyamid, Polysulfon, Vinylpolymere, Polyester, Polyolefine und PTFE, wie auch poröses Glas oder Glaskeramik, Graphitoxid, Polyelektrolytkomplexe und dergleichen mehr.

Neben den symmetrischen Membranen (Membrandicke meist 10 - 100 $\mu$m), die beiderseits gleich gestaltet sind, haben für verschiedenartigste Trennverfahren besonders die asymmetrischen Membranen aus dünner, aktiver Trennschicht (Aktivschichtdicke meist kleiner als 0,1-10 $\mu$m) auf hochporöser Tragschicht, die das System stützt, stabilisiert und den Stofftransport nicht beeinflußt (Tragschichtdicke ca. 30- 350 $\mu$m) immer mehr an Bedeutung gewonnen. So sind bei den meisten industriell angewendeten Membrantrennverfahren inzwischen asymmetrische Membransysteme im Einsatz. Vorteil der dünnen Trennschicht ist der geringe Stofftransportwiderstand, welcher den Permeatstrom im Vergleich zu symmetrischen Membranen deutlich steigert. Bei den asymmetrischen Membranen unterscheidet man Phaseninversionsmembranen, bei denen Trenn- und Tragschichten aus dem gleichen Material bestehen, und Kompositmembranen, bei denen die Werkstoffe bei der Schichten unterschiedlich gewählt und miteinander verbunden werden.

Insbesondere zur Gastrennung, und hier vor allem für die technisch lukrative Trennung von Sauerstoff und Stickstoff aus Luft sind verschiedene asymmetrische Membransysteme im Stand der Technik bekannt. So beschreibt die_EP 428 052 eine semipermeable Kompositmembran, die aus einem mit porösem Adsorptionsmaterial überzogenen dünnen porösen Substrat besteht. Zu deren Herstellung wird ein Polymerlatex auf geeignetes Substratmaterial wie beispielweise Graphit, aufgetragen und nachfolgend bei erhöhter Temperatur in einer inerten Atmosphäre carbonisiert. Die in der EP 428 052 beschriebenen Membranpolymervorstufen umfassen Polyvinylidenchlorid, Polyvinylchlorid, Polyacrylnitril, Styroldivinylbenzolcopolymer und Mischungen davon. Die resultierenden Kompositmembranen sind bis zu 3 mm dick.

Das grundsätzliche Problem derartiger Kompositsysteme ist die Rißbildung bzw. die geringe Haftung von keramischen Membranen oder Polymermaterialien auf den Trägermaterialien bei der Herstellung dieser Systeme, insbesondere wenn hohe Packungsdichten erzielt werden sollen. Polymerfilme auf keramischen Trägern schrumpfen während der Carbonisierung, es kommt zur Rißbildung. Den nötigen hohen Anpreßdrücken zur Verbesserung der Haftung halten die Trägermaterialien mangels Stabilität meist nicht stand.

Die US-Patentschrift 3,033,187 beschreibt poröse Membranen, die durch Abscheidung von Metalloxidpartikeln in die Poren eines gesinterten, porösen metallischen Trägermaterials hergestellt werden.

Das US-Patent 4,699,892 beschreibt asymmetrische Kompositmembranen mit einer ultradünnen Schicht Zeolith auf porösen Trägersubstraten.

Das US-Patent 4,759,977 beschreibt ein Verfahren zur Herstellung eines flexiblen Kohlenstoffmaterials, wobei ein Kompositmaterial umfassend Kohlefasern mit einer durchschnittlichen Länge von 6 bis 50 mm und eine Bindemittel Karbonisiert wird.

Die US-Patentschrift 5,695,818 beschreibt asymmetrische Membranen auf Kohlenstoffbasis, wobei symmetrische Hohlfasermembranen mit CVD-Methoden porenmodifiziert werden.

Die WO 00/24500 offenbart Formkörper aus Aktivkohlematerial, die oberflächlich mittels CVD-Verfahren zu asymmetrischen Trägermembranen modifiziert werden.

Die US-Patentschrift 5,925,591 beschreibt ein Verfahren zur Herstellung von symmetrischen Kohlenstoffmembranen bestehend aus hohlen Kohlenstofffasern. Hierzu werden geordnete Bündel von hohlen Cellulosefasern nach Wasserentfernung bei erhöhter Temperatur pyrolysiert, wobei während der Pyrolyse Lewissäurekatalysatoren zugesetzt werden. Die beschriebenen Faserbündelmembranen sind bis zu 1 m lang.

Die zitierten Kohlefasermembranen hingegen erweisen sich als problematisch, weil sie aufwendige Apparaturen benötigen, um eine homogene Carbonisierung der gebündelter Cellulosefasern zu erreichen.

Die symmetrischen Membranen des Standes der Technik haben den Nachteil, daß sie aufgrund ihrer Dicke zu große Stofftransportwiderstände aufbauen, worunter die Wirtschaftlichkeit der Trennungen leidet.

Dem gegenüber besteht ein Bedarf nach einfach und kostengünstig herzustellenden Membranen und Membranträgern, sowie einem entsprechenden Verfahren zu deren Herstellung, die bei hoher Trennwirkung für verschiedenste Fluid-Trennaufgaben eingesetzt werden können, wobei sie die Vorteile symmetrischer und asymmetrischer Membranen miteinander verbinden.

Aufgabe der vorliegenden Erfindung ist es daher, unter Überwindung der Nachteile des Standes der Technik flexible Membran-Werkstoffe zur Verfügung zu stellen. Insbesondere ist es eine Aufgabe der vorliegenden Erfindung, Materialien zur Verwendung als Membranen und Membranträger mit hohen Packungsdichten bei gleichzeitig optimalen Strömungsprofilen zur Verfügung zu stellen, die trotz geringer Dicke und geringem Stofftransportwiderstand nicht zwingend auf einen Träger angewiesen sind.

Eine weitere Aufgabe der vorliegenden Erfindung besteht in der Bereitstellung eines Herstellungsverfahrens für dünne flächige stabile und flexible Materialien, welches die unaufwendige und präzise Herstellung von Membranen mit definierten Stofftrenneigenschaften ermöglicht.

Die genannten Aufgaben werden durch die unabhängigen Verfahrens- und Produktansprüche gelöst. Bevorzugte Ausführungsformen ergeben sich durch Kombination mit den Merkmalen der abhängigen Unteransprüche.

### Herstellungsverfahren

Die verfahrensbezogene Aufgabe der Erfindung wird gelöst durch ein Verfahren zur Herstellung von flexiblen und porösen Materialien auf Basis oxidischer und/oder nichtoxidischer Keramik einschließlich Kohlenstoff, umfassend durch folgende Schritte:

a) Herstellung einer flächigen Grundmatrix aus Faserstoffen, deren Bestandteile im wesentlichen durch Wasserstofibrückenbindungen zusammengehalten werden, auf einer zur Papierherstellung geeigneten Maschine;

b) Behandeln der Grundmatrix unter Pyrolysebedingungen bei erhöhter Temperatur in einer Atmosphäre, die im wesentlichen frei von Sauerstoff ist,

dadurch gekennzeichnet daß die Oberfläche der Grundmatrix vor der Pyrolyse ein- oder beidseitig mit einem Polymerfilm beschichtet wird.

Überraschenderweise hat sich gezeigt, daß auf diese Weise flexible, stabile poröse Materialien hergestellt werden können, die sich in hervorragender Weise als Membranträger, Membranen und Molsiebe in geeigneten Vorrichtungen zur Auftrennung und Reinigung von Fluiden, insbesondere Gasen, eignen. Die erfindungsgemäßen Membranmaterialien verbinden die Vorteile der symmetrischen Membran (einfacher Aufbau und Herstellung) mit denen der asymmetrischen Membran (geringer Stofftransportwiderstand, gute Stabilität). Sie zeichnen sich ferner durch eine hohe Porosität, hohe mechanische Stabilität, Korrosionsstabilität gegenüber aggressiven Medien, gute Flexibilität, hohe Temperaturstabilität und hohe Mikrogenauigkeit sowie gutes Haftungsvermögen aus.

Durch Pyrolyse einer flächigen, insbesondere papierartigen Grundmatrix aus Faserstoffen, insbesondere aus polymeren, faserhaltigen Materialien, unter Sauerstoffausschluß bei erhöhter Temperatur, gegebenenfalls mit anschließender Porenmodifikation durch chemische Gasphasenabscheidung (CVD) flüchtiger Keramikprecursor oder Kohlenwasserstoffverbindungen lassen sich auf einfache Weise eigensteife, selbsttragende Membransysteme erhalten.

Die erfindungsgemäß verwendete flächige Grundmatrix wird auf einer Papiermaschine aus Bestandteilen erzeugt, die im wesentlichen durch Wasserstoffbrückenbindungen zusammengehalten werden. Durch Verwendung papierartiger, auf Papier- und Papierverarbeitungsmaschinen hergestellter Materialien lassen sich sehr dünne und zugleich sehr stabile Strukturen herstellen, die letztendlich hohe Packungsdichten des Endmaterials ermöglichen.

Flächig im Sinne dieser Erfindung bedeutet, daß zwei Dimensionen des Materials im Mittel 5 mal so groß sind wie die dritte Dimension.

Als Ausgangsmaterial lassen sich beispielsweise Faserstoffe aller Art, papierbildende Fasermaterialien und dergleichen, beispielsweise aus Kohlenhydraten im allgemeinen oder auch aus cellulosehaltigen Materialien wie Papier, Karton, Pappe, Holz, Pflanzen und/oder deren Teile, Baumwolle, Leinen, Stoffe und/oder Gewebe aus Baumwolle und/oder Leinen oder ähnlichen cellulosehaltigen Materialien, sowie beliebige andere Gegenstände auf Cellulosebasis verwenden. Erfindungsgemäß bevorzugt wird die Verwendung von Papier, insbesondere von Kohlepapier, das als Füllstoff Aktivkohleruß und/oder Aktivkohlefasern enthält.

Insbesondere eignen sich erfindungsgemäß Grundmatrixmaterialien, die im wesentlichen aus natürlichen, halbsynthetischen und/oder synthetischen Faserstoffen bestehen. Die Faserstoffe gewährleisten bei der während der Pyrolyse/Carbonisierung auftretenden Verdichtung eine ausreichende Porosität.

Geeignete natürliche Faserstoffe umfassen Cellulose, Amylose, Stärke, Polyosen, Lignin, Flachs, Hanf, Jute, Sisal, Kokos, Kenaf, Ramie, Rosella, Sunn, Urena, Leinen, Baumwolle, Kapok, sowie Fasern aus Getreide-Stroh, Alfa- oder Esparto-Gras, Fique, Henequen, Manila, Phormium, Bagasse, Linters Abaka, Kiefernfasern und dergleichen.

Geeignete halbsynthetische Faserstoffe werden ausgewählt aus Sulfat-Zellstoff, Sulfit-Zellstoff, Natron-Zellstoff, Cellulosederivate wie Celluloseester und -ether, Celluloseacetat, Alginat, Viskose, Kupferseide, Polyisoprene und dergleichen.

Geeignete synthetische Faserstoffe werden ausgewählt aus Homo- und Copolymeren von Polyacrylnitril, Polyvinylallcohol, Polyethylen, Polypropylen, Polyamid, Polyester, Polyurethan und dergleichen.

In einer bevorzugten Ausführungsform des erfindungsgemäßen Verfahrens besteht die Grundmatrix aus einem Papier, ausgewählt aus Büttenpapier, Druckpapier, Filtrierpapier, Fließpapier, holzfreies Papier, holzhaltiges Papier, Kraftpapier, Kreppapier, Kartonpapier, Pappe, LWC-Papier, Ölpapier, Overlaypapier, Packpapier, Recyclingpapier, Synthesefaserpapier, Tissue und dergleichen.

Besonders geeignet sind Papiere mit einer volumenbezogenen Fläche von mindestens 1.000 $m^2/m^3$, vorzugsweise 10.000 $m^2/m^3$ und besonders bevorzugt 20.000 $m^2/m^3$.

In gleicher Weise geeignet sind jedoch auch Baumwollstoffe und Gewebe oder dergleichen.

Insbesondere ist es bevorzugt, daß die Grundmatrix, insbesondere eine aus Papier, Zusätze aus papierbildenden Fasermaterialien, Glasfasern, Kohlefasern, Kunststoffasern, Kohlenstoff-Nanotubes (single und/oder multi wall), Fullerene, Metallfasern und pulver, Asbest, Steinwollfasern, Quarzfasern, pulverförmigen Füllstoffen wie Ruß, Kaolin, Aluminiumoxide, Siliciumoxide, Zeolithe, Aktivkohlepulver, Perovskite, Teerpech und dergleichen umfaßt. Zusätze wie Sand, Zement, Glasfasern, jedoch insbesondere Kohlenstoffzusätze wie Ruß, Aktivkohleruß, Teerpechpulver, Kohlefasern und/oder dergleichen sind besonders bevorzugt. Kohlefasern im Papier erhöhen die Bruchstabilität und Flexibilität der resultierenden Membranen bzw. Kohlenstoffmaterialien, wohingegen Aktivkohleruß und dergleichen in nachfolgenden CVD-Prozeßschritten als Kristallisationskeim fungiert und eine Steuerung der Porosität der Membran während des Herstellungsprozesses ermöglicht.

Zur Herstellung erfindungsgemäßer selbsttragender, eigensteifer Membranen wird bevorzugt Kohlepapier eingesetzt, das bis zu ca. 50 Gew.-%, vorzugsweise 1-50 Gew.-% Aktivkohleruß als Füllstoff enthält. Besonders bevorzugt wird die Verwendung von Aktivkohleruß mit hohen BET-Oberflächen von mindestens 200 $m^2/g$, vorzugsweise mindestens 500 $m^2/g$.

Um Permeatströmungen während des Betriebes einer erfindungsgemäßen selbsttragenden, eigensteifen Kohlenstoffmembran in geeigneter Weise zu lenken und deren Strömungsprofil zu optimieren, ist es in einer bevorzugten Ausführungsform erfindungsgemäß bevorzugt, die eingesetzte Grundmatrix vor der Carbonisierung mit einer Prägestruktur zu versehen, beispielsweise einer Rille-, Reihen- oder Netzstruktur, vorzugsweise mit einer Rillenstruktur in Form paralleler Rillen. Bei nachfolgender Faltung des Papiers ergeben sich aus den übereinandergelagerten Rillen definierte Abströmkanäle, die auf der Feedseite der Membran eine optimale Verwirbelung der Fluide und auf der Permeatseite schnellen Stoffaustausch ermöglichen. Jedoch können je nach Form des zu pyrolysierenden Materials und Verwendungszweck der Membran auch beliebige andere Oberflächenstrukturierungen, z.B. Bohrungen, Vertiefungen, Noppen und dergleichen, aufgebracht werden, die der Fachmann entsprechend der Form der Membran wählen wird.

Bei erfindungsgemäß besonders bevorzugtem Kohlepapier ist das Aufprägen von Diagonal-Rillen im Abstand von ca. 100 nm auf das Kohlepapier, wahlweise einseitig oder beidseitig auf dem Papierbogen, besonders vorteilhaft, jedoch lassen sich entsprechende Prägungen auch auf beliebigen anderen Papiermaterialien verwirklichen. Besonders bevorzugt ist eine permeatseitige Strukturprägung, die mittels dem Fachmann bekannter Prägetechniken, beispielsweise durch Walzenprägung, erzeugt werden kann.

Erfindungsgemäß wird vor der Pyrolyse einseitig oder beidseitig ein Polymerfilm aufgebracht. Gegebenenfalls wird zusätzlich einseitig ein dünner Rußfilm auf der faserhaltigen Grundmatrix aufgetragen, wobei dieser beispielsweise mittels eines Kalanders in das Material hineingepreßt wird. Bevorzugt wird der Rußfilm auf der späteren Feed-Seite der Membran aufgebracht, wobei Ruß mit einer BET-Oberfläche von mindestens 500 $m^2/g$ verwendet wird.

Der ein- oder beidseitig auf der Oberfläche der Grundmatrix aufgebrachte Polymerfilm umfaßt polymere Zusatzstoffe, welche ausgewählt sind aus Polyethylen, Polypropylen, Polycarbonat, Polyethylenterephthalat, Polystyrol, Polyamid, Polyacryl, Epoxyharz, Novolac-Harz, SiloxaneTeerpech, Bitumen, Kautschuk-, Polychloropren- oder Poly(styrol-co-butadien)-Latexmaterialien und dergleichen sowie beliebige Mischungen davon. Die Aufbringung kann durch Imprägnieren und/oder ein- oder beidseitiges Beschichten der Grundmatrix erfolgen.

Neben Ruß können auch andere pulver-, blättchen- oder faserartige Materialien ein-oder beidseitig auf eine polymerbeschichtete bzw. imprägnierte Grundmatrix aufgebracht werden. Diese Materialien umfassen beispielsweise aktivierter Ruß, Kohlenstoff-Nanotubes (single und/oder multi wall), Fullerene, Kohlefasern, Aktivkohlefasern Aktivkohlepulver, Kohlenstoffmolekularsieb, Perowskite, Aluminiumoxide, Siliciumoxide, SiC, BN, Edelmetallpulver von Pt, Pd, Au oder Ag.

Zur Steuerung des Verdichtungsprozesses beim Carbonisierungsschritt ist es ferner erfindungsgemäß bevorzugt, das gegebenenfalls geprägte oder strukturierte Ausgangsmaterial mit einem geeigneten Klebstoff zu imprägnieren und vor der Carbonisierung gegebenenfalls zu trocknen bzw. auszuhärten. Der Klebstoff ist dabei vorzugsweise so beschaffen, daß er sich während des Trocknungsprozesses zusammenzieht und das Papier schrumpfen läßt. Hierdurch wird das Papier wie eine Art Feder vorgespannt, wodurch der im Ofenprozeß bei der Carbonisierung entstehende naturgemäße Schrumpf während des Verdichtungsprozesses kompensiert wird. In Verbindung beispielsweise mit geprägtem Kohlepapier ist es so möglich, daß Papier durch Anwendung eines geeigneten Klebstoffes beim Trocknen senkrecht zu seiner Rillenprägung schrumpfen zu lassen.

Geeignete Klebstoffe sind solche, die vorzugsweise erst ab ca. 50°C anschmelzen und Klebeeigenschaften annehmen, und die im nachgeschalteten Pyrolyseprozeß einen möglichst hohen Anteil an C-Strukturen zurücklassen. Beispiele hierfür sind Teerpech, Teerpechpulver, sogenannte Heißschmelzklebstoffe auf Basis von EVA, SBS, SEBS etc., Phenolharz, oder auch schäumende Klebstoffe mit hohem Kohlenstoffanteil wie z.B. Prestodur® PU55.

Ferner kann es vorteilhaft sein und ist erfindungsgemäß bevorzugt, den Gegenstand ein- oder beidseitig, bevorzugt nur auf der späteren Permeatseite der Membran, an den Rändern und Abdichtflächen mit einem katalytisch wirkenden Metall zu bedrucken, das im nachgeschalteten CVD/CVI-Prozeß einen gezielten Kohlenstoffaufwachsprozeß steuert und somit eine Abdichtung der Membran an den Rändern ermöglicht. Geeignete Metalle sind Salze und Verbindungen der Übergangsmetalle wie beispielsweise Eisen, Kobalt, Nickel, Chrom, sowie insbesondere deren Oxide.

Auf eine derartige Randabdichtung kann jedoch auch vollständig verzichtet werden, wenn die Membran in einer Trennvorrichtung beispielsweise in entsprechend angepaßte dichte Rahmenkonstruktionen eingebaut wird.

Das cellulosehaltige Material kann vor der Carbonisierung je nach den konstruktiven Anforderungen vorgeformt werden. So kann beispielsweise Papier oder Pappe beliebig gefaltet oder plissiert werden, und diese Form anschließend durch das erfindungsgemäße Verfahren fixiert werden. Die Faltung kann mit den üblichen, dem Fachmann wohlbekannten Verfahren erfolgen.

Durch geeignete Wahl der Grundmatrixmaterialien bzw. des Aufbaus der Grrundmatrix ist es ferner möglich in die erfindungsgemäßen Membrankörper elektrisch voneinander isolierte Bereiche zu implementieren.

In einer bevorzugten Ausführungsform wird ein geprägtes, mit polymeren Zusatzstoffen und/oder Kleber beschichtetes Papier mit Hilfe einer Rotationsfaltmaschine oder einer Messerfaltmaschine gefaltet und anschließend dichtest gepackt konditioniert. Optional wird an den Abdichtbereichen (Längsstreifen) durch ein geeignetes Werkzeug Falte für Falte zusammengepreßt und mit einer zusätzlichen Prägung versehen, die die Falte zusätzlich zusammenhält. Ferner können die einzelnen Falten in geeigneter Weise miteinander verklebt werden, so daß die eingeprägten Strukturen in der gefalteten Anordnung so übereinander zu liegen kommen, daß sich zwischen zwei Faltenlagen Kanäle bilden. Vorzugsweise wird so gefaltet, daß sich ein Flächenvolumen des geprägten papierartigen Materials von mindestens 50 $m^2/m^3$, vorzugsweise 500 $m^2/m^3$ ergibt. Ferner ist ein mittlerer Faltenabstand von weniger als 15 mm bevorzugt, insbesondere von weniger als 5 mm, besonders bevorzugt zwischen 5 $\mu$m und 5 mm.

Die bevorzugte mittlere Faltendichte von erfindungsgemäßen Membranen bzw. Membranträgern liegt bei 100 bis 10.000 Falten pro Meter.

In bevorzugten Ausführungsformen der Erfindung, wird vor der Pyrolyse zunächst bei erhöhter Temperatur getempert, um Spannungen abzubauen. Die bevorzugte Temperatur liegt oberhalb Raumtemperatur, insbesondere zwischen 30 und 200 °C.

Die Pyrolyse bzw. Carbonisierung im Verfahrensschritt c) des gegebenenfalls strukturierten, vorbehandelten, vorgeschrumpften und/oder vorgeformten Materials erfolgt in einem geeigneten Ofen bei erhöhter Temperatur, möglichst unter weitgehendem Sauerstoff-ausschluß. Hierzu kann mit im wesentlichen sauerstofffreiem Inertgas entweder in statischer Atmosphäre, oder bevorzugt im Inertgasstrom gearbeitet werden. Auch eine Pyrolyse im Unterdruck bzw. Vakuum ist erfindungsgemäß möglich.

Durch Behandeln der faserstoffhaltigen Grundmatrix bei Temperaturen im Bereich von 200 - 1000°C unter Sauerstoffausschluß wird die kohlenstoffhaltige Faserstruktur pyrolytisch carbonisiert und damit in eine im wesentlichen reine Kohlenstoffstruktur überführt, wobei im Regelfall eine Verdichtung des Materials auftritt. Durch Steuerung des Temperaturprofils bei der Pyrolyse kann dieser Verdichtungsprozeß so gesteuert werden, daß ein Kohlenstoflkörper mit definierter Porenstruktur und Porosität erhalten wird. Generell gilt, daß je geringer die Pyrolysetemperatur ist, desto poröser aber auch mechanisch instabiler ist der carbonisierte Körper. Umgekehrt gilt, daß bei zu hoher Pyrolysetemperatur ein Verbacken des Kohlenstoffgerüstes auftritt, woraus kompakte, hochdichte, brikettartige Strukturen mit nur mehr geringer bis gar keiner Porosität auftreten.

Adsorptionseffekte, Porenkondensationseffekte, sowie Chemisorption an imprägnierten und nichtimprägnierten Kohlenstoffmembranen führen zu einer Vielzahl an Permeationsmodi, die unter Umständen zu unerwarteten Permeationsselektivitäten führen. Insbesondere bei Porenradien zwischen 5 und 15 Å treten vor allem bei (Metall-)imprägnierten Kohlenstoffmembranen Effekte auf, die die bevorzugte Permeation des größeren Moleküls durch die Membranporen ermöglichen.

Erfindungsgemäß wird die faserstoffhaltige Grundmatrix bei der Pyrolyse unter Schutzgas und/ oder im Vakuum bei Temperaturen von 200 bis 1000° C, vorzugsweise bei 250 bis 500° C carbonisiert. Geeignete Schutzgase umfassen Stickstoff, Edelgase wie beispielsweise Argon, sowie alle anderen inerten, nicht mit Kohlenstoff reagierenden Gase und Gasverbindungen.

Gegebenenfalls kann es bevorzugt sein, die faserstoffhaltige Grundmatrix vor der Carbonisierung auf geeignete Vorrichtungen aufzubringen, die ein Absaugen von entstehenden Pyrolysegasen durch das zu pyrolysierende Material erlauben. Hierzu kann das Material beispielsweise auf poröse Körper aufgebracht werden, die über einen zentralen Abström-/Absaugkanal verfügen, an den während der Pyrolyse Vakuum angelegt wird. Vorteilhaft ist dabei, das die während der Pyrolyse zum Teil lokal verpuffungsartig ablaufende Freisetzung von Zersetzungsgasen schnell und effizient in einer Richtung abgeführt werden können, so daß ein lokales Aufplatzen der Membranoberfläche vermieden wird.

Ferner hat dies den Vorteil, daß bei der anschließenden CVD/CVI-Stufe die Precursorgase in einer definierten Vorzugsrichtung durch die entstehenden Membranelemente gesaugt werden können, was eine zusätzliche Steuerung der örtlichen Selektivität der Abscheidung ermöglicht.

Der Pyrolyseschritt wird vorzugsweise in einem kontinuierlichen Ofenprozeß durchgeführt. Die gegebenenfalls vorbehandelte und gefaltete Grundmatrix wird dabei einerseits auf der einen Seite dem Ofen zugeführt, andererseits wird die stabile Membran am anderen Ende des Ofens wieder herausgezogen. Besonders bevorzugt ist es, wenn die zu pyrolysierenden Gegenstände im Ofen auf einer Lochplatte oder dergleichen aufliegen, durch welche unterseitig Unterdruck angelegt werden kann.

Dies ermöglicht auf einfache Weise sowohl eine Fixierung der Gegenstände im Ofen, als auch eine Absaugung und optimale Inertgasdurchströmung der Teile während der Pyrolyse. Der Ofen kann durch entsprechende Inertgasschleusen in Segmente unterteilt sein, in denen nacheinander die Schritte der Pyrolyse/Carbonisierung, des CVD/CVI-Prozesses (optionaler Verfahrensschritt) und gegebenenfalls weitere Nachbehandlungsschritte wie Nachaktivieren/-oxidieren oder Metallimprägnierung ablaufen.

Alternativ hierzu kann die Pyrolyse auch in einem geschlossenen Ofen durchgeführt werden, was insbesondere dann bevorzugt ist, wenn die Pyrolyse im Vakuum durchgeführt werden soll.

Während der Pyrolyse tritt üblicherweise eine Gewichtsabnahme von ca. 50-90%, bevorzugt ca. 80 %, je nach verwendetem Ausgangsmaterial und Vorbehandlung auf. Ferner tritt hierbei ein Schrumpf der Grundmatrix in der Größenordnung von 0-60 %, vorzugsweise etwa 0-20 % auf.

Nach der Pyrolyse sind die erfindungsgemäßen Materialien dadurch gekennzeichnet, daß der Schrumpf einer erfindungsgemäßen Membran / Grundmatrix maximal 5 %, bevorzugt maximal 1%, beim Erhitzen in inerter Atmosphäre von 20 °C auf 600 °C und anschließendem Abkühlen auf 20 °C beträgt. Der nach der Pyrolyse bei nochmaliger Erhitzung auf 600 °C entsprechend gefalteter Grundmatrixkörper auftretende Gewichtsverlust beträgt (nach Vortrocknung) maximal 10 Gew.%.

Wesentlich beim erfindungsgemäßen Verfahren ist, daß die Pyrolyse während des Carbonisierungsschrittes möglichst vollständig erfolgt, d.h. daß die Faserstoffe zusammen mit den weiteren Bestandteilen des Ausgangsmaterials nahezu vollständig in Kohlenstoff oder Basiskeramiken überführt werden. Die erfindungsgemäßen Membranen weisen einen Kohlenstoffgehalt von mindestens 50 Gew.-% auf, bei hauptsächlich kohlenstoffbasierten Membranen mindestens 90 Gew.-%.

In einer besonders bevorzugten Ausführungsform werden in der Grundmatrix Alkali- oder Erdalkalimetallsalze mit eingebaut, die nach der Pyrolyse bzw. nach der CVD/CVI mittels Wasser oder wäßriger Säuren wieder herausgelöst werden können, wodurch zusätzliche Porosität erzeugt wird.

Das carbonisierte Material kann gegebenenfalls anschließend in einem weiteren optionalen Verfahrensschritt einem sogenannten CVD-Prozeß (Chemical Vapour Deposition, chemische Gasphasenabscheidung) unterzogen. Hierzu wird das carbonisierte Material mit geeigneten Precursorgasen bei hohen Temperaturen behandelt. Derartige Verfahren sind im Stand der Technik seit langem bekannt.

Als Kohlenstoff-abspaltende Precursor kommen nahezu alle bekannten gesättigten und ungesättigten Kohlenwasserstoffe mit ausreichender Flüchtigkeit unter CVD-Bedingungen in Frage. Beispiele hierfür sind Methan, Ethan, Ethylen, Acetylen, lineare und verzweigte Allcane, Alkene und Alkine mit Kohlenstoffzahlen von $C_1$-$C_{20}$, aromatische Kohlenwasserstoffe wie Benzol, Naphthalin etc., sowie ein- und mehrfach alkyl-, alkenyl- und alkinylsubstituierte Aromaten wie beispielsweise Toluol, Xylol, Cresol, Styrol etc.

Als Keramik-Precursor können $BCl_3$, $NH_3$, Silane wie Tetraethoxysilan (TEOS), $SiH_4$, Dichlorodimethylsilan (DDS), Methyltrichlorosilan (MTS), Trichlorosilyldichloroboran (TDADB), Hexadichloromethylsilyloxid (HDMSO), $AlCl_3$, $TiCl_3$ oder Mischungen davon verwendet werden.

Diese Precursor werden in CVD-Verfahren zumeist in geringer Konzentration von etwa 0,5 bis 15 Vol.-% in Mischung mit einem Inertgas, wie beispielweise Stickstoff, Argon oder dergleichen angewendet. Auch der Zusatz von Wasserstoff zu entsprechenden Abscheidegasgemischen ist möglich. Bei Temperaturen zwischen 500 und 2000°C, vorzugsweise 500 bis 1500°C und besonders bevorzugt 700 bis 1300°C, spalten die genannten Verbindungen Kohlenwasserstofffragmente bzw. Kohlenstoff oder keramische Vorstufen ab, die sich im Porensystem des pyrolysierten Materials im wesentlichen gleichmäßig verteilt niederschlagen, dort die Porenstruktur modifizieren und so zu einer im wesentlichen homogenen Porengröße und Porenverteilung im Sinne einer weiteren Optimierung führen.

Zur Steuerung der gleichmäßigen Verteilung der abgeschiedenen Kohlenstoffpartikel im Porensystem des carbonisierten Gegenstandes kann beispielsweise während der Abscheidung der Kohlenstoff-Precursor an einer Oberfläche des carbonisierten Gegenstands zusätzlich ein Druckgradient, z.B. in Form eines kontinuierlichen Unterdrucks bzw. Vakuums angelegt werden, wodurch die abgeschiedenen Kohlenstoffpartikel gleichmäßig in das Porengefüge des carbonisierten Stoffes eingesaugt werden (sogenannte "forced flow CVI", Chemical Vapour Infiltration; siehe z.B. W. Benzinger et. all., Carbon 1996, 34, Seite 1465). Die so erzielte Homogenisierung des Porengefüges erhöht zudem die mechanische Festigkeit der selbsttragenden Membran.

Dieses Verfahren kann analog auch mit Keramik-Precursoren angewendet werden.

Während des CVD/CVI-Prozesses tritt üblicherweise eine Gewichtszunahme im Bereich des 0,1- 30 fachen des Gewichts des carbonisierten Materials auf.

Besonders bevorzugt wird bis zu einer 0,5-10 fachen Gewichtszunahme Kohlenstoff abgeschieden.

Während des CVD/CVI-Prozesses können flüchtige Übergangsmetallverbindungen wie beispielsweise Eisen-, Kobalt- oder Nickelcarbonyle dem Abscheidegasgemisch zugesetzt werden, wobei beobachtet wurde, daß sich diese Metalle in den großen Poren vermehrt niederschlagen und hier ein beschleunigtes CVD-Wachstum katalysieren. Dies führt zu einer weiteren Verbesserung der Porengrößen-Homogenität.

Im Anschluß an diesen dreistufigen Prozeß kann in einem weiteren Nachbehandlungsschritt durch gezielte Oxidation mittels Luft, Wasserdampf, Kohlendioxid, Stickoxiden oder dergleichen während des Abkühlvorganges die Geometrie des Porensystems nachträglich noch verändert bzw. maßgeschneidert werden. Eine Nachaktivierung mit $H_2O$-Dampf, $CO_2$ oder $O_2$-abspaltende Gasen (wie beispielsweise $NO_x$) erfolgt üblicherweise bei Temperaturen von 600-1200°C, vorzugsweise bei 800 bis 1000°C. Eine Nachaktivierung mit Luft erfolgt üblicherweise bei Temperaturen von 100-800°C, vorzugsweise bei 250 bis 500°C. Die Nachaktivierungsgase können hierbei sowohl in reiner Form, als auch verdünnt mit Inertgas zugesetzt werden. Vorzugsweise wird die Nachaktivierung in einem Segment eines kontinuierlichen Ofenprozesses durchgeführt.

In einer besonders bevorzugten Ausführungsform wird die fertige Membran bzw. der Katalysatorträger abschließend mit Übergangsmetallen wie Pd, Pt, Ir, Rh, Co, Ni, Fe, Au, Ag, Cu, Mn, Mo, W, etc. behandelt. Dies erfolgt auf einfache Weise durch Imprägnierung des Trägers mit den entsprechenden Metallsalzlösungen und anschließende Trocknung unter Schutzgas oder in reduzierender Atmosphäre. Diese Nachbehandlung ermöglicht die Modifizierung einzelner Permselektivitäten bzw. die Implementierung verkeimungsverhindernder Spezies auf der Trägeroberfläche.

Ferner bewirkt die Übergangsmetallimprägnierung katalytische Eigenschaften der Membran, so daß diese Wasserstoff besonders gut chemisorbieren und permeieren können.

## Membran

Die so erhaltenen selbsttragenden, eigensteifen Membranelemente weisen eine homogene Porenstruktur auf. Ferner sind die erfindungsgemäß herstellbaren Materialien als Membranen mechanisch stabil und können für nahezu beliebige Fluidtrennaufgaben maßgeschneidert werden. Das erfindungsgemäße Verfahren ermöglicht die Herstellung von stabilen eigensteifen Membransystemen, die mit definierten Porenstrukturen durch Variation einfacher Verfahrensparameter für nahezu beliebige Einsatzzwecke im Bereich der Fluidtrennung angepaßt werden können.

Basis hierbei ist, daß durch pyrolytisches Verschweißen von gefalteten *a prioni* flexiblen Materialien die Flexibilität im Verbund zugunsten der Eigensteifigkeit aufgehoben wird. Das Endmaterial ist dann für technische Anwendungskriterien geeignet, wenn eine Kraft von ca. 0,1 N/cm$^2$ ohne merkliche Nachgabe des Materials von oben auf den Faltenverband einwirkt. In diesem Sinne ist der Terminus "Eigensteifigkeit" in der vorliegenden Erfindung zu verstehen: Bei einer Gewichtsbelastung von 1 kg/100 cm$^2$ Membranfläche tritt eine Deformierung von weniger als 1% auf, d.h. die erfindungsgemäßen Membranen/Träger widerstehen einem Flächendruck von etwa 0,1 N/cm$^2$.

Die Pyrolyse und der gegebenenfalls nachgeschaltete CVD/CVI-Prozeß werden über die Temperatur und die Atmosphärenbedingungen in geeigneter Weise so gesteuert, daß die erfindungsgemäß hergestellten eigensteifen Membranen eine für die gewünschte Fluidtrennaufgabe optimale Porosität und mittlere Porengröße aufweisen. Die BET-Oberflächen (Adsorption von $N_2$, -196°C) erfindungsgemäß hergestellter Membranen liegen im Bereich von mindestens 2 m$^2$/g, vorzugsweise mindestens 50 m$^2$/g und besonders bevorzugt mindestens 100 bis 200 m$^2$/g.

Durch das erfindungsgemäße Verfahren lassen sich Materialien zur Verwendung als Membranen erhalten, die insbesondere durch die Prägung und Faltung der verwendeten Grundmatrix einzigartige Porositäten und Porenvolumina aufweisen. Bei erfindungsgemäß hergestellten Membranpaketen werden zwischen 20 und 80 Vol.%, bevorzugt zwischen 30 und 70 Vol.%, bes. bevorzugt zwischen 40 und 60 Vol.% des Raumvolumens des Membranpaketes durch Transportporen mit Durchmessern zwischen 400 $\mu$m und 5 $\mu$m, bevorzugt zwischen 300$\mu$ und 10$\mu$, gebildet. Diese Porenvolumina und Durchmesser lassen sich über Hg-Porosimetrie in bekannter Weise bestimmen. Transportporen in erfindungsgemäßen Membranen und Membranpaketen zeichnen sich dadurch aus, daß diese im lösungsmittelgefülltem Zustand durch kurzes Zentrifugieren (16g, 1 Min.) zu mindestens 30%, bevorzugt mind. 50%, besonders bevorzugt zu 70% des Porenvolumens wieder freigelegt werden. Hierzu läßt man die mit Tetrachlormethan vollgesogene Membran, die in einem mit Tetrachorkohlenstoff gesättigten Behältnis eingebracht ist, zwei Min. abtropfen und anschließend wiederum in tetrachlorkohlenstoffgesättigter Atmosphäre in einem Zentrifugalfeld mit 16 g =157 m/s$^2$ innerhalb von 1 min abschleudern. Anschließend wird gravimetrisch die im Porensystem verbleibende Tetrachorkohlenstoff Menge bestimmt.

In einer besonders bevorzugten Ausführungsform ist die fertige Membran so dimensioniert, daß die zweidimensionale Projektion des homogenen Membrankörpers mindestens 5 cm$^2$ (Länge mal Breite) Fläche aufweist, bei Mindestdimensionen für die Länge und Breite von jeweils 1 cm.

Die erfindungsgemäß mittels Falten der Grundmatrix vor der Pyrolyse erhaltenen makroporösen Membrankörper weisen eine Lichtdurchlässigkeit senkrecht zur Anströmfläche bei 5 cm Körpertiefe und Verwendung blauen Lichts der Wellenlänge 460-480 nm von weniger als 1 % auf.

Der Anwendungsbereich erfindungsgemäß herstellbarer Membranen ist relativ groß, da durch einfache Anpassung der Herstellungsbedingungen und die Wahl des Ausgangsmaterials auf einfache Weise Membranen mit definiertem Aufbau, Struktur und Eigenschaftsprofil maßgeschneidert werden können. So können erfindungsgemäße Membranen für die Trennung von Gasen, so beispielsweise die Trennung von Sauerstoff und Stickstoff aus Luft, die Abtrennung von Wasserstoff aus Prozeßgasen, die Anreicherung beliebiger Gase aus komplexen Gasgemischen sowie die Trennung von Fluorchlorkohlenwasserstoffen und verschiedenen Isotopen und dergleichen verwendet werden. Insbesondere bevorzugt ist die Verwendung erfindungsgemäßer Membranen/Membranträger und Adsorbentien in geeigneten Vorrichtungen zur Anreicherung des Sauerstoffgehaltes der Raumluft in Innenräumen.

Auch in flüssiger Phase lassen sich die erfindungsgemäß herstellbaren Membranen verwenden, beispielsweise zur Reinigung von Wasser, Abtrennung von Salzen aus wäßrigen Lösungen etc.

Die erfindungsgemäß herstellbaren Membranen sind auf einfache Weise aus einfachsten Ausgangsmaterialien herzustellen und zeichnen sich durch hohe mechanische Stabilität, definierte Porengefüge, und hohe chemische Beständigkeit aus. Sie können in einer Vielzahl räumlicher Anordnungen in Membrantrennvorrichtungen eingepaßt werden, wobei sie entweder selbsttragend als symmetrische Membran verwendet werden können, oder aber durch Aufbringung auf geeignete Trägermaterialien auch analog zusätzlich stabilisiert und wie asymmetrische Membranen verwendet werden können.

**Membranträser/Katatysortäser/Rußfilter**

Nach dem erfindungsgemäßen Verfahren lassen sich ebenso als Membranträger oder Katalysatorträger oder als Rußfilter geeignete Elemente herstellen, die hauptsächlich aus Siliziumcarbid, Aluminiumoxid sowie Siliziumoxid bestehen.

Hierfür ist lediglich das jeweils geeignete Ausgangsmaterial für die Grundmatrix auszuwählen, also Silizium- oder Aluminiumhaltige Verbindungen neben den beschriebenen Kohlenstoffverbindungen.

Insbesondere zur Herstellung SiC-haltiger Träger oder Filter sind als Grundmatrixmaterialien Si-haltige Verbindungen wie Glasfasern, Siliziumoxide, Silikate, Kieselsäuren, sowie insbesondere auch monomere, oligomere oder polymer Organosiliziumverbindungen wie Organosilanole, Organosilane, Organohalogensilane, sowie organosubstituierte Siloxane, Silazane, Silathiane, Carbosilane, Silikone, Silicide, beliebige Mischungen der Vorgenannten und dergleichen verwendbar.

Zur Herstellung SiC-haltiger Materialien kann es erforderlich sein, die Pyrolysetemperatur auf 1000°C bis 3500 °C , vorzugsweise 1500 °C bis 3000 °C und besonders bevorzugt 2000 °C bis 2500 °C anzuheben.

**Fluidtrennvorrichtung**

Unter Verwendung erfindungsgemäß hergestellter Membranen auf der Basis einer gefalteten Grundmatrix lassen sich hocheffiziente Fluidtrennvorrichtungen konstruieren. Diese ähneln einem künstlichen Baum auf dichtesten Raum komprimiert, wobei die Membranelemente die Blätter bilden. Die nach Art von Sulzerpackungen gefalteten Membranelemente weisen Faltenhöhen von 1 cm bis 1 m und geprägte Abströmkanäle von bis zu 10 mm im Durchmesser auf. der Faltenabstand beträgt 1 cm bis 20 $\mu$m. Die Anordnung der Membranen erfolgt derart, daß der Feed und das Permeat im Kreuzstrom zueinander geführt werden. Die Membranen können wahlweise feed- oder permeatseitig beheizt werden, um den Stofftransport zu beschleunigen.

Bevorzugte Fluidtrennvorrichtungen sind in Form eines Membranmoduls konstruiert, wobei das Membranelement derart eingehaust ist, das die gezielte Durchströmung des Membrankörpers parallel zur Faltung ermöglicht wird und die Unterseite des Membranelements auf einer porösen Unterlage aufgebracht und am Rand im wesentlichen abgedichtet ist, und wobei an der Unterlage Anschlüsse zur Abführung des Permeats angebracht sind.

Die Stömungscharakteristik in einem derartigen erfindungsgemäßen Membranmodul ist so beschaffen, daß der Modul bei einem Druckgradient zwischen Feed und Retentat von 1 bar/m Durchströmungslänge und einem abgesenktem Druck im Permeat, bezogen auf das arithmetischem Mittel des Druckes zwischen Feed und Retentat von 0,5 bar, im getrockneten und entgasten Zustand, bei Beaufschlagung mit $N_2$ ein Permeat/ Retentatverhältnis von < 10% bewirkt, und bei Beaufschlagung unter gleichen Druckverhältnissen mit $H_2$ der absolute Permeatstrom um einen Faktor mindestens 10, bezogen auf den Stickstoff-Permeatstrom größer ist, und bei Beaufschlagung unter gleichen Druckverhältnissen mit $SF_6$ der absolute Permeatstrom um einen Faktor von mindestens 10, bezogen auf den Stickstoff-Permeatstrom, kleiner ist.

Mit entsprechenden Fluidtrennvorrichtungen lassen sich beispielsweise bei der Sauerstoffanreicherung von Raumluft $O_2$-Durchsätze von 50 l/h bis zu 200m$^3$/h erzielen, sofern der Fachmann geeignete Membrandimensionen vorsieht.

Beispielsweise kann mit einem erfindungsgemäßen Membranmodul der Abmessungen 30x30x50 cm (HxBxT) bei Beaufschlagung mit Luft und einem Unterdruck von 800 mbar etwa 44,2 m$^3$ Luft mit einem $O_2$-Gehalt von 52 Vol. % pro Stunde produzieren.

**Kohlenstoff- und Keramikmaterial**

Ferner weist das Kohlenstoff und Keramikmaterial, aus welchem die erfindungsgemäß hergestellten Membranen bestehen, einzigartige Eigenschaften auf. Nach dem erfindungsgemäßen Verfahren herstellbares Kohlenstoff- und Keramikmaterial zeichnet sich durch eine überraschende Flexibilität aus. Mechanisch zerkleinertes, nach dem erfindungsgemäßen Verfahren hergestelltes Kohlenstoff- und Keramikmaterial zeigt als Schüttgut im Gegensatz zu herkömmlicher Aktivkohle einen erheblichen Rückpralleffekt, wenn man einen geeigneten Körper auf die Schüttung fallen läßt.

Diese Flexibilität des erfindungsgemäßen Kohlenstoff- und Keramikmaterials, die durch eine besonders fehlerarme Struktur verursacht wird, ist die Ursache für die überlegenen Stofftrenneigenschaften dieser Materialien: Letztlich kennt auch die Natur keine Membran, die nicht auch flexibel ist, beispielsweise Haut oder Blatt-Membranen.

Zur Bestimmung der Flexibilität des erfindungsgemäßen Materials wird das in geeigneter Weise mechanisch zerkleinerte Material durch Sieben in standardisierte Schüttgutfraktionen überführt. Zur weiteren Charakterisierung werden wahlweise die 10x18 US-Mesh (2,00x1,00 mm) Siebfraktion (1 - 2 mm) und/oder die 20x40 US-Mesh (0,85x0,425 mm) Siebfraktion verwendet.

Ferner wird das gesiebte Material zur Standardisierung und Reinigung von adsorbierten Spezies eine Stunde unter Refluxbedingungen in Methylenchlorid behandelt, anschließend getrocknet und nochmals eine Stunde in 10 %iger wäßriger Salzsäurelösung unter Rückfluß gekocht und bei 80 °C bis auf einen Restwassergehalt von unter 1% getrocknet.

*Dynamische Flexibilität nach Fallrohrtest:*

Zur Bestimmung der dynamischen Flexibilität wird in einem senkrecht stehenden durchsichtigen Fallrohr aus Plexiglas von 21 mm Innendurchmesser und 1000 mm Höhe eine möglichst dichte Schüttung aus 2,5 g wie oben beschrieben vorbehandelten erfindungsgemäßen Materials vorgelegt. Hierzu rüttelt man langsam über eine Rüttelschiene das Schüttgut gleichmäßig innerhalb von 15 Sekunden in das Fallrohr, wodurch sich eine gleichmäßige Schüttung ergibt. Die minimale Schütthöhe sollte dabei 2 cm betragen, gegebenenfalls ist die Menge entsprechend anzupassen. Anschließend wird optional evakuiert und aus einer Fallhöhe von 850 mm (abzüglich der Schütthöhe) ein zylindrischer Fallkörper von 16 mm Durchmesser und 120 mm Höhe und einem Gewicht von 17,5 g (Kanten abgerundet) senkrecht auf die Probeschüttung fallengelassen

Mit Hilfe einer geeigneten Methode (z.B. Video-Kontrolle gegen mm-Maßstab) wird die tiefste Stelle sowie die absolute Rückprallhöhe des Fallkörpers ermittelt. Der mit 100 multiplizierte Quotient aus absoluter Rückprallhöhe in mm durch die Schütthöhe in mm wird als relative Rückprallhöhe im Vakuum bezeichnet und in Prozent [%] angegeben. Sie ist ein Maß für die dynamische Flexibilität. Der Fallversuch wird mit 5 unterschiedlichen, jeweils frisch gesiebten Proben jeweils 20 mal durchgeführt.

Der Wert für die relative Rückprallhöhe (= dynamische Flexibilität) ergibt sich dann aus dem maximal gemessenen Wert.

Erfindungsgemäßes Kohlenstoffmaterial weist eine relative Rückprallhöhe der 10x18 US-Mesh (2,00x1,00 mm) Siebfraktion, gemessen durch Fallrohrtest ohne Vakuum, von mindestens 20 %, vorzugsweise mindestens 50 % und besonders bevorzugt mindestens 100 % auf. Im Vakuum gemessen ergibt die 10x18 US-Mesh (2,00x1,00 mm) Fraktion eine relative Rückprallhöhe von mindestens 30 %, bevorzugt mindestens 70 % und besonders bevorzugt mindestens 150 % auf.

Die 20x40 US-Mesh (0,85x0,425 mm) Siebfraktion zeigt ohne Vakuum eine relative Rückprallhöhe von mindestens 10 %, vorzugsweise mindestens 30 % und besonders bevorzugt von mindestens 70 %; im Vakuum 20 %, vorzugsweise 50 %, besonders bevorzugt 100 %.

*Statische Flexibilität:*

Als weiteres Maß für die Flexibilität der erfindungsgemäßen Kohlenstoffmaterialien dient die statische Flexibilität. Hierzu wird im Fallrohr wie oben beschrieben zunächst eine 2,5 g Schüttung des Kohlenstoffmaterials (10x18 US-Mesh (2,00x1,00 mm) Siebfraktion) vorgelegt. Diese Schüttung wird mit einem zylinderformigen Gewicht von 10g (Durchmesser 20 mm) aus Aluminium beschwert. Anschließend wird ein zusätzliches Gewicht von 2000g aufgegeben. An der Oberkante des Al-Zylinders mißt man jetzt die Basishöhe des Schüttgutes. Nach Entfernung des 2000g-Gewichtes wird wiederum an der Oberkante des Al-Gewichtes die Relaxationshöhe bestimmt, welche die statische Flexibilität in Prozent [%] wie folgt ergibt:

$$\text{Relaxationshöhe [\%]} = (\text{Relaxationshöhe [mm]} - \text{Basishöhe [mm]}) \times 100 / \text{Basishöhe [mm]}$$

Erfindungsgemäßes Material weist eine statische Flexibilität der 10x18 US-Mesh (2,00x1,00 mm) Siebfraktion von mindestens 1%, bevorzugt 3% und besonders bevorzugt 5 %, gemessen als prozentuale Relaxation einer Schüttung von 2,5 g in einem zylindrischen Rohr von 21mm Innendurchmesser nach Auflage eines Gewichts von 2000g auf.

Zur Bestimmung der Härte erfindungsgemäßen Kohlenstoffmaterials wird der oben beschriebene Fallrohrtest mit einer Probe von 2,5g (10x18 US-Mesh (2,00x1,00 mm) Siebfraktion) 100 mal durchgeführt und die Probe anschließend auf 50 mesh abgesiebt. Der Siebrückstand in % ergibt die Härte. Die 20x40 US-Mesh (0,85x0,425 mm) Siebfraktion wird zur Härtebestimmung auf einem 70 mesh Sieb abgesiebt.

Erfindungsgemäßes Kohlenstoffmaterial weist eine Härte der 10x18 US-Mesh (2,00x1,00 mm) Siebfraktion von mindestens 50 %, vorzugsweise mindestens 80 % und besonders bevorzugt mindestens 90 % auf, gemessen als Siebrückstand in % einer 50 mesh Siebung nach 100 Fallversuchen im Fallrohrtest. Für die 20x40 US-Mesh (0,85x0,425 mm) Fraktion ergibt sich eine Härte von mindestens 50 %, vorzugsweise mindestens 80 % und besonders bevorzugt von 90 %, gemessen als Siebrückstand in % einer 70 mesh Siebung nach 100 Fallversuchen im Fallrohrtest.

Ferner weist das erfindungsgemäße Kohlenstoffmaterial ein Schüttgewicht der 10x18 US-Mesh (2,00x1,00 mm) Siebfraktion von 0,03-0,6 g/cm$^3$, vorzugsweise von 0,1-0,3 g/cm$^3$.

Die BET-Oberfläche der 10x18 US-Mesh (2,00x1,00 mm) Siebfraktion des erfindungsgemäßen Kohlenstoffmaterials beträgt mindestens 10 m$^2$/g, vorzugsweise 50 m$^2$/g und besonders bevorzugt von mindestens 100-200 m$^2$/g. BET-Oberflächen, soweit nicht ausdrücklich anders angegeben, werden nach der Methode von Brunauer, Emmet und Teller als monomolekulare Oberflächenbelegung mit Stickstoff bei -196°C in Abhängigkeit von angelegten Druck bestimmt.

Ferner weist die 10x18 US-Mesh (2,00x1,00 mm) Siebfraktion des erfindungsgemäßen Kohlenstoffmaterials eine Iodzahl von mindestens 20 mg/g, bevorzugt 50mg/g und besonders bevorzugt 100mg/g auf, bestimmt nach ASTM-D 4607.

Erfindungsgemäßes Kohlenstoffmaterial (10x18 US-Mesh (2,00x1,00 mm) Siebfraktion) weist ferner einen CTC-Wert gemessen nach ASTM-D 3467-76 von mindestens 5 Gew.-%, sowie einen Veraschungsrückstand von maximal 15 Gew.-%, bevorzugt maximal 10 Gew.-% bei zweistündiger Verbrennung in Gegenwart von Sauerstoff bei 1000 °C auf. Ferner zeigt es eine Leitfähigkeit von ca. 0,74 Siemens/cm.

Erfindungsgemäßes kohlenstoffbasiertes Material weist einen Veraschungsrückstand von maximal 45 Gew.-% bei zweistündiger Verbrennung in Gegenwart von Sauerstoff bei 1000 °C auf, wohingegen erfindungsgemäßes keramisches Material einen Veraschungsrückstand von mindestens 90 Gew.-% aufweist.

*Molekularsiebeigenschaften:*

Das erfindungsgemäße Kohlenstoffmaterial weist überdurchschnittliche Molekularsiebeigenschaften im Vergleich zu herkömmlicher Aktivkohle auf. Zur Bestimmung der Molekularsiebeigenschaften dient der Sauerstoff Stickstoff Durchbruchsversuch: Hierzu werden 50g erfindungsgemäßes Kohlenstoffmaterial (10x18 US-Mesh (2,00x 1,00 mm) Siebfraktion) in einem Rohradsorber vorgelegt und evakuiert (30 min bei p < 1 Torr). Bei einer Leerrohr-Strömungsgeschwindigkeit von ca. 1 cm/s wird technische Luft (20 % $O_2$, 80 % $N_2$) bei 20 °C in den Rohradsorber geströmt. Über eine Gasküvette werden die ersten 50 ml durchtretende Gasmenge isoliert und nachfolgend bezüglich ihres $N_2$-Gehaltes analysiert.

Erfindungsgemäßes Kohlenstoffmaterial (10x18 US-Mesh (2,00x1,00 mm) Siebfraktion) weist einen derart bestimmten $N_2$-Gehalt von mindestens 90 % auf, das heißt Sauerstoff wird mit erhöhter Selektivität im Kohlenstoffmaterial zurückgehalten.

Das erfindungsgemäße Verfahren kann vorteilhaft auch in den Herstellungsprozeß einer kompletten Membrantrennvorrichtung integriert werden. Die resultierende Trennvorrichtung enthält die erfindungsgemäßen selbsttragenden, eigensteifen Membranen in einer besonders vorteilhaften, kompakten Anordnung.

Die erfindungsgemäßen Membranen und das erfindungsgemäße Kohlenstoffmaterial kann im Bereich der Fluidtrennung vielfältig verwendet werden. Verwendungsbeispiele sind:

- Trennung von Sauerstoff und Stickstoff zur Anreicherung von $O_2$ aus Luft, insbesondere als Vorstufe einer Zeolith-PSA-Stufe (Pressure Swing Adsorption) und/oder einer Perowskit-Membran in technisch angewendeten Lufttrennungsverfahren oder in Verbindung mit der Einspeisung von angereichertem $O_2$ für Verbrennungsprozesse, insbe-

sondere wenn zur internen Kühlung Wasser in den Verbrennungsraum eingedüst wird.

- Auftrennung von Kohlenwasserstoffgemischen.
- Abtrennung von Wasserstoff aus wasserstoffhaltigen Kohlenwasserstoffgasgemischen, beispielsweise aus Crackgasen der Petrochemie, wobei insbesondere Kohlenwasserstoffe bevorzugt durch die Membran permeieren.
- Abtrennung von Wasserstoff aus wasserstoffhaltigen Kohlenwasserstoffgasgemischen an edelmetallmodifizierten erfindungsgemäßen Membranen, insbesondere mit Pt- oder Pd-Imprägnierung, wobei $H_2$ bevorzugt durch die Membran permeiert.
- Allgemeine Gasfiltration.
- Abgasreinigung, insbesondere die Abtrennung flüchtiger organischer Verbindungen (VOC) aus Abgasen.
- Reinigung von Trinkwasser.
- Reinigung von Trinkwasser, wobei die Membran durch galvanische Methoden vor Verkeimung geschützt wird; insbesondere durch Aufprägung eines kapazitiven Wechselstroms im Schaltkreis zu einer geeigneten Gegenelektrode.
- Gewinnung von Trinkwasser.
- Entsalzung oder Enthärtung von Wasser oder Meerwasser.

Anhand des folgenden Ausführungsbeispiels soll die Erfindung näher veranschaulicht werden:

Beispiel 1: Membranherstellung

In Beispiel 1 wird ein Papierbogen von ca. 112 mm x 233 mm (Dicke 0,15 mm), mit Faserstoffen und Zusätzen nach Tabelle 1 verwendet:

Tabelle 1

|  | Gewichts-% |
|---|---|
| Leinen | 71 |
| Baumwolle | 13 |
| Aktivkohleruß | 8 |
| Kohlefaser | 8 |
| Gesamt: | 100 |

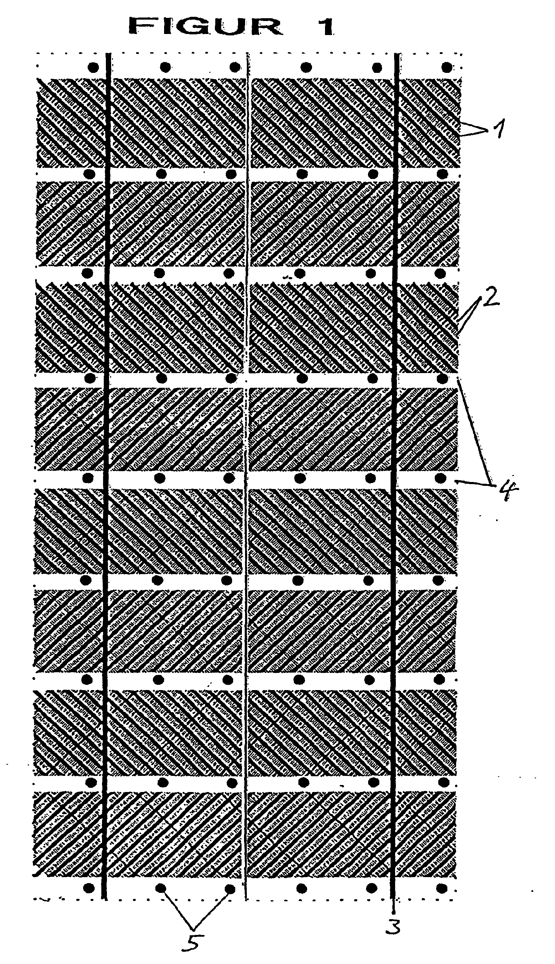

Auf den Papierbogen mit einem Flächengewicht von 155 g/cm$^2$ wurde auf einer Seite (Permeatseite) eine Prägestruktur, wie in Figur 1 gezeigt, mittels einer Prägewalze aufgeprägt. Dabei zeigen die in Figur 1 dunkel wiedergegebenen Linien in die Papierebene hinein geprägte Rillenstrukturen. Die schwarz gezeigten "Makrokanäle" (1) weisen eine Breite von ca. 1mm bei einer Tiefe von 0,5 mm und einem Abstand voneinander von 2 mm auf. Die rechtwinklig dazu angeordneten "Mikrokanäle" (2) (grau) sind 0,25 mm breit und im Abstand von 0,25 mm voneinander angeordnet. Die Längsstreifen (3) definieren die Faltstege, an denen das Papier nachfolgend alternierend nach vorn und hinten gefaltet wird. Die ungeprägten Querstreifen (4) liegen nach der Faltung aufeinander und dichten die jeweiligen "Blattsegmente" voneinander ab. Zum besseren Zusammenhalt nach der Faltung sind die Querstreifen (4) mit abwechselnd in und aus der Papierebene ragenden Druckknopfprägungen (5) versehen.

Nach der Prägung wurde das Papier an den Querstreifen (4) mit Teerpechpulver bestrichen und auf einer Rotationsfaltmaschine entlang der Faltlinien (3) gefaltet und dichtest gepackt konditioniert.

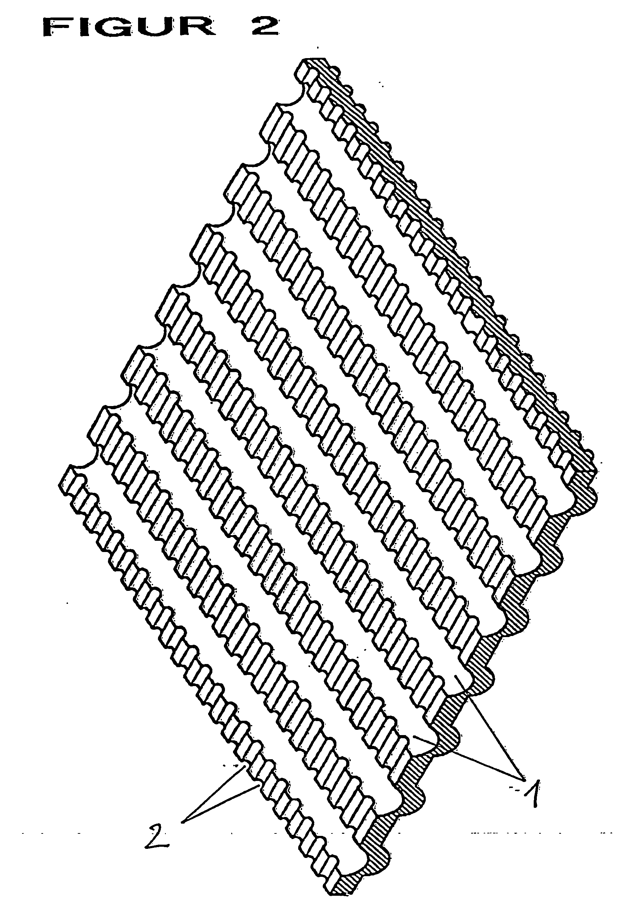

Figur 2 zeigt in vergrößerter Darstellung einen Ausschnitt aus der Oberflächenstruktur eines erfindungsgemäß verwendbaren geprägten Papiers, mit breiten Makrokanälen (1) und schmalen, rechtwinklig dazu angeordneten Mikrokanälen (2).

Das so gebildete Papiermodul wurde unter Stickstoffgas bei ca. 200 °C bis ca. 600 °C in einem geschlossenen Ofen carbonisiert, wobei eine Gewichtsabnahme um ca. 80 % und ein mittlerer Schrumpf um ca. 20 % beobachtet wurde. Anschließend wurde in einer geschlossenen CVI-Apparatur zwischen ca. 700 °C und 1300 °C Methangas (20 Vol.-% in $N_2$) mit einem Druckabfall von ca. 50 Pa durch das carbonisierte Membranpaket gesaugt. Hierbei wurde bis zu einer Gewichtszunahme um das 6-fache des carbonisierten Pakets Kohlenstoff abgeschieden. Nach dem Abkühlen wurde eine stabile, eigensteife Membran mit einem Gewicht von 4,85g (Ausgangsgewicht 4 g) und Abmessungen von 88,0x186,0 mm, mit metallartig glänzender Oberfläche erhalten.

Beispiel2 Kohlenstoffmaterial

Die Membran aus Beispiel 1 wurde mit einem Wiegemesser mechanisch zerkleinert und gesiebt. Die 10x18 US-Mesh (2,00x1,00 mm) Siebfraktion wurde für die weitere Charakterisierung des Kohlenstoffmaterials verwendet. Die Meßmethoden wurden wie oben beschrieben verwendet. Das erfindungsgemäße Kohlenstoffinaterial zeigte die in Tabelle 2 zusammengefaßten Eigenschaften.

Tabelle 2

| | |
|---|---|
| Relative Rückprallhöhe nach Fallrohrtest | |
| 10x18 US-Mesh (2,00x1,00 mm) (nichtevakuiert) | 150 % |
| 10x18 US-Mesh (2,00x1,00 mm) (im Vakuum) | 204 % |
| 20x40 US-Mesh (0,85x0,425 mm) (nichtevakuiert) | 52 % |
| 20x40 US-Mesh (0,85x0,425 mm) (im Vakuum) | 104 % |
| Statische Flexibilität | |
| (10x18 US-Mesh (2,00x1,00 mm)) | 4 % |
| Schüttgewicht (10x18 US-Mesh (2,00x1,00 mm)) | $0,23$ g/cm$^3$ |
| Härte nach Fallrohrtest (10x18 US-Mesh (2,00x1,00 mm), Siebrückstand der 50 mesh Siebung nach 100 Fallversuchen) | 94 % |
| BET-Oberfläche | 237 m$^2$/g |
| Iodzahl | 220 mg/g |
| CTC | 27 Gew.-% |
| $N_2$-Gehalt im Durchbruchsversuch | 92,8 % |
| Veraschungsrückstand (2h, 1000°C) | 1,3 % |

**Patentansprüche**

1. Verfahren zur Herstellung von flexiblen und porösen Materialien auf Basis oxidischer und/oder nichtoxidischer Keramik einschließlich Kohlenstoff,
   umfassend die Schritte:

   a) Herstellung einer flächigen Grundmatrix aus Faserstoffen, deren Bestandteile im wesentlichen durch Wasserstoftbrückenbindungen zusammengehalten werden, auf einer zur Papierherstellung geeigneten Maschine;
   b) Behandeln der Grundmatrix unter Pyrolysebedingungen bei erhöhter Temperatur in einer Atmosphäre, die im wesentlichen frei von Sauerstoff ist,

   **dadurch gekennzeichnet, daß** die Oberfläche der Grundmatrix vor der Pyrolyse ein- oder beidseitig mit einem Polymerfilm beschichtet wird.

2. Verfahren nach Anspruch 1,
   **dadurch gekennzeichnet, daß** vor der Pyrolyse gegebenenfalls bei erhöhter Temperatur getempert wird und/oder anschließend an die Pyrolyse die pyrolysierten Grundmatrix mittels chemischer Dampfphasenabscheidung und/oder Dampfphaseninfiltration (CVD/CVI) zur Abscheidung geeigneter Precursoren behandelt wird.

3. Verfahren nach einem der Ansprüche 1 oder 2,
   **dadurch gekennzeichnet, daß** die Grundmatrix Inhaltsstoffe umfaßt, die aus papierbildenden Fasermaterialien, Glasfasern, Kohlefasern, Kunststoffasern, Kohlenstoff-Nanotubes (single und/oder multi wall), Fullerene, Metallfasern und -pulver, Asbest, Steinwollfasem, Quarafasern, pulverförmigen Füllstoffen wie Ruß, Kaolin, Aluminiumoxide, Siliziumoxide, Zeolithe, Aktivkohlepulver, Perovskite, Teerpech und dergleichen ausgewählt sind.

4. Verfahren nach einem der vorhergehenden Ansprüche,
   **dadurch gekennzeichnet, daß** der Polymerfilm polymere Zusatzstoffe ausgewählt aus Polyethylen, Polypropylen, Polycarbonat, Polyethylenterephthalat, Polystyrol, Polyamid, Polyacryl, Phenolharz, Epoxyharz, Novolac-Harz, Siloxane, Teerpech, Bitumen, Kautschuk-, Polychloropren- oder Poly(styrol-co-butadien)-Latexmaterialien, sowie Mischungen davon, umfaßt.

5. Verfahren nach einem der vorhergehenden Ansprüche,
   **dadurch gekennzeichnet, daß** auf die Grundmatrix zusätzlich pulver-, blättchen- oder faserartiges Material ausgewählt aus Ruß, aktivierter Ruß, Kohlenstoff-Nanotubes (single und/oder multi walled), Fullerene, Kohlefasern, Aktivkohlefasern Aktivkohlepulver, Kohlenstoffmolekularsieb, Perowskite, Aluminiumoxide, Siliziumoxide, SiC, BN, Edelmetallpulver von Pt, Pd, Au oder Ag aufgebracht wird.

6. Verfahren nach einem der vorhergehenden Ansprüche,
**dadurch gekennzeichnet, daß** die Grundmatrix im wesentlichen aus natürlichen, halbsynthetischen und/oder synthetischen Faserstoffen besteht, und wobei die Pyrolysetemperatur so gewählt wird, daß der Gegenstand nach der Pyrolyse einen Kohlenstoffanteil von mehr als 50 Gew.-%, bevorzugt mehr als 75 Gew.-% aufweist.

7. Verfahren nach Anspruch 6,
**dadurch gekennzeichnet, daß** die Faserstoffe ausgewählt sind aus der Gruppe der natürlichen Faserstoffe bestehend aus Cellulose, Amylose, Stärke, Polyosen, Lignin, Flachs, Hanf, Jute, Sisal, Kokos, Kenaf, Ramie, Rosella, Sunn, Urena, Leinen, Baumwolle, Kapok, sowie Fasern aus Getreide-Stroh, Alfa- oder Esparto-Gras, Fique, Henequen, Manila, Phonnium, Bagasse, Linters, Abaka, Kiefernfasern.

8. Verfahren nach Anspruch 6,
**dadurch gekennzeichnet, daß** die Faserstoffe ausgewählt sind aus der Gruppe der halbsynthetischen Faserstoffe bestehend aus Sulfat-Zellstoff, Sulfit-Zellstoff, Natron-Zellstoff, Cellulosederivate wie Celluloseester und -ether, Celluloseacetat, Alginat, Viskose, Kupferseide, Polyisoprene.

9. Verfahren nach Anspruch 6,
**dadurch gekennzeichnet, daß** die Faserstoffe ausgewählt sind aus der Gruppe der synthetischen Faserstoffe bestehend aus Homo- und Copolymeren von Polyacrylnitril, Polyvinylalkohol, Polyethylen, Polypropylen, Polyamid, Polyester, Polyurethan.

10. Verfahren nach einem der Ansprüche 2 bis 9,
**dadurch gekennzeichnet, daß** als Keramik-Precursor bei einer CVD und/oder CVI-Behandlung $BCl_3$, $NH_3$, Silane wie Tetraethoxysilan (TEOS), $SiH_4$, Dichlorodimethylsilan (DDS), Methyltrichlorosilan (MTS), Trichlorosilyldichloroboran (TDADB), Hexadichloromethylsilyloxid (HDMSO), $AlCl_3$, $TiCl_3$ oder Mischungen davon verwendet werden.

11. Verfahren nach einem der Ansprüche 1 bis 10,
**dadurch gekennzeichnet, daß** vor der Pyrolyse die Grundmatrix mit einer Struktur geprägt wird, beispielsweise mit einer Rillen-, Reihen- oder Netzstruktur, und die Grundmatrix anschließend gefaltet wird, wobei die einzelnen Falten in geeigneter Weise miteinander verklebt werden, um ein kompaktes Faltenpaket zu bilden.

12. Material, herstellbar nach einem Verfahren nach einem der Ansprüche 1 bis 11, **gekennzeichnet durch** ein Transportporenvolumen von zwischen 20 und 80 Vol.% und/oder einen mittleren Porendurchmesser zwischen 400 $\mu$m und 5 $\mu$m.

13. Material nach Anspruch 12,
**gekennzeichnet durch** eine BET-Oberfläche der 10x18 US-Mesh (2,00x 1,00 mm) Siebfraktion von mindestens 10 $m^2$/g, bevorzugt mindestens 50 $m^2$/g und besonders bevorzugt mindestens 100 $m^2$/g.

14. Material nach einem der Ansprüche 12 oder 13,
**gekennzeichnet durch** eine $N_2$-Zahl von mindestens 90 % im Sauerstoff-Stickstoff-Durchbruchsversuch.

15. Material nach einem der Ansprüche 12 bis 14 in Form eines keramischen Materials, **gekennzeichnet durch** einen Veraschungsrückstand von mindestens 90 Gew.-% bei zweistündiger Verbrennung in Gegenwart von Sauerstoff bei 1.000°C.

16. Material, herstellbar nach dem Verfahren nach Anspruch 11,
**gekennzeichnet durch** einen mittleren Faltenabstand von weniger als 15 mm, bevorzugt weniger als 5 mm, insbesondere bevorzugt zwischen 5 $\mu$m und 5 mm.

17. Verwendung des Materials nach einem der Ansprüche 12 bis 16 als Adsorbens, Membran und/oder Membranträger.

18. Verwendung des Materials nach einem der Ansprüche 12 bis 17,
in einer kontinuierlich durchströmten Vorrichtung zur Trennung, Aufkonzentrierung und/oder Reinigung von Gasen und Flüssigkeiten, in geeigneten Vorrichtungen zur Auftrennung von $O_2/N_2$-Gemischen, wobei Sauerstoff im Permeat angereichert wird, in geeigneten Vorrichtungen zur Abtrennung von Wasserstoff aus $H_2$-haltigen Gemischen, wobei $H_2$ im Permeat angereichert wird, in geeigneten Vorrichtungen zur Reinigung von Wasser, in geeigneten Vorrichtungen als Filter zur Reinigung von Flüssigkeiten und/oder Gasen, in geeigneten Vorrichtungen zur Anreicherung von Sauerstoff in der Raumluft von Innenräumen, und/oder als Katalysator oder Katalysatorträger.

**Claims**

1. A method for production of flexible and porous materials based on oxidic and/or non-oxidic ceramics including carbon, comprising the steps:

    a) Producing a planar basic matrix of fiber materials, the components of which are kept together essentially by hydrogen bonds, on a machine suitable for paper fabrication;
    b) Treating the basic matrix under pyrolytic conditions at increased temperatures in an atmosphere that is essentially oxygen-free.

    **characterized in that** the surface of the basic matrix is coated uni- or bilaterally with a polymer film before pyrolysis.

2. The method according to claim 1,
   **characterized by** tempering before pyrolysis, if necessary at increased temperatures, and/or treating the pyrolyzed basic matrix using chemical vapor deposition and/or chemical vapor infiltration (CVD/CVI) after the pyrolysis for deposition of suitable precursors.

3. The method according to any one of claims 1 or 2,
   **characterized in that** the basic matrix comprises components that are selected from paper-forming fiber materials, glas fibers, carbon fibers, plastic fibers, carbon nanotubes (single and/or multi walled), fullerenes, metal fibers and powders, asbestos, rock wool fibers, quartz fibers, powder fillers such as carbon black, kaolin, aluminium oxides, silicon oxides, zeolites, charcoal powder, perovskites, tar pitch and the like.

4. The method according to any one of the previous claims,
   **characterized in that** the polymer film comprises polymeric additives selected from polyethylene, polypropylene, polycarbonate, polyethylene terephthalate, polystyrene, polyamide, polyacrylics, phenol resin, epoxy resin, novolac resin, siloxanes, tar pitch, bitumen, rubber-, polychloroprene or poly(styrene-co-butadiene)-latex materials and the like as well as mixtures thereof.

5. The method according to any one of the previous claims,
   **characterized in that** powder-, sheet-like- or fiber-like material, selected from carbon black, charcoal black, carbon nanotubes (single and/or multi walled), fullerenes, carbon fibers, charcoal fibers, charcoal powder, carbon molecular sieve, perovskites, aluminium oxides, silicon oxides, SiC, BN, noble-metal powder of Pt, Pd, Au or Ag or the like, is additionally applied to the basic matrix.

6. The method according to any one of the previous claims,
   **characterized in that** the basic matrix essentially consists of natural, semisynthetic and/or synthetic fiber substances, and wherein the pyrolysis temperature is selected such that after pyrolysis the item has a carbon fraction of more than 50 percent per weight, preferably more than 75 percent per weight.

7. The method according to claim 6,
   **characterized in that** the fiber substances are selected from the group of natural fiber substances consisting of cellulose, amylose, starch, polyoses, lignins, flax, hemp, jute, sisal, coco, kenaf, ramie, roselle, sunn, urena, linen, cotton, kapok as well as fibers from corn straw, alfa or esparto grass, fique, henequen, manila, phormium, bagasse, linters, abaka, and pine fibers.

8. The method according to claim 6,
   **characterized in that** the fiber substances are selected from the group of semisynthetic fiber substances consisting of cellulose sulfate, cellulose sulfite, cellulose bicarbonate, cellulose derivatives such as cellulose esters and ethers, cellulose acetate, alginate, viscose, copper silk, and polyisoprenes.

**9.** The method according to claim 6,
**characterized in that** the fiber substances are selected from the group of synthetic fiber substances consisting of homo- and copolymers of polyacrylnitrile, polyvinyl alcohol, polyethylene, polypropylene, polyamide, polyester, and polyurethane.

**10.** The method according to any one of the claims 2 to 9,
**characterized in that** $BCl_3$, $NH_3$, silanes such as tetraethoxysilane (TEOS), $SiH_4$, dichlorodimethylsilane (DDS), methyltrichlorosilane (TDADB), hexadichloromethyl silyloxide (HDMSO), $AlCl_3$, $TiCl_3$ or mixtures thereof are used as ceramic precursors in a CVD and/or CVI treatment.

**11.** The method according to any one of the claims 1 to 10,
**characterized in that** the basic matrix is embossed before pyrolysis with a structure, for example a groove, row or web structure, and the basic matrix then being folded, the individual folds being glued to each other in a suitable manner to form a compact folded package.

**12.** A material producible according to the method of any one of claims 1 to 11,
**characterized by** a transport pore volume of from 20 to 80 vol.% and/or a medium pore diameter between 400 $\mu$m and 5 $\mu$m.

**13.** The material according to claim 12,
**characterized by** a BET surface of the 10x18 US-mesh (2.00 mm x 1.00 mm) sieve fraction of at least 10 m$^2$/g, preferably at least 50 m$^2$/g, and especially preferably at least 100 m$^2$/g.

**14.** The material according to any one of claims 12 or 13,
**characterized by** an N$_2$ number of at least 90 % in the oxygen-nitrogen break-through test.

**15.** The material according to any one of claims 12 to 14, in the form of a ceramic material,
**characterized by** a combustion residue of at least 90 percent by weight after two hour combustion in the presence of oxygen at 1,000 °C.

**16.** A material producible according to the method of claim 11,
**characterized by** an average distance between folds of less than 15 mm, preferably less than 5 mm, especially preferably between 5 $\mu$m and 5 mm.

**17.** A use of the material according to any one of claims 12 to 16,
as an adsorbent, a membrane and/or a membrane carrier.

**18.** The use of the material according to any one of claims 12 to 17,
in a device with continuous flow-through for separation, concentration and/or purification of gases and fluids, in suitable devices for separation of $O_2$/$N_2$ mixtures, with oxygen being enriched in the permeate, in suitable devices for separation of hydrogen from $H_2$-containing mixtures, with $H_2$ being enriched in the permeate, in suitable devices for purification of water, in suitable devices as filter for purification of fluids and/or gases, in suitable devices for enrichment of oxygen in the interior air of interiors and/or as a catalyst or catalyst carrier.

**Revendications**

**1.** Procédé de fabrication de matériaux flexibles et poreux à base de céramique oxydée et/ou non oxydée y compris du carbone, comprenant les étapes de

a) production d'une matrice plane en matières fibreuses dont les composants sont maintenus ensemble essentiellement par la formation de ponts hydrogène, sur une machine appropriée pour la fabrication du papier ;
b) traitement de la matrice dans des conditions de pyrolyse à une température élevée dans une atmosphère qui est essentiellement dépourvue d'oxygène,

**caractérisé en ce que**, avant la pyrolyse, la surface de la matrice est revêtue d'un film polymère sur une face ou sur les deux faces.

**2.** Procédé selon la revendication 1, **caractérisé en ce que**, avant la pyrolyse, la température est éventuellement portée à un niveau élevé et/ou après la pyrolyse, la matrice pyrolysée est traitée par dépôt chimique en phase vapeur et/ou infiltration en phase vapeur (CVD/CVI) pour dépôt de précurseurs appropriés.

**3.** Procédé selon l'une quelconque des revendications 1 ou 2, **caractérisé en ce que** la matrice comprend des composants choisis parmi les matériaux fibreux formant du papier, fibres de verre, fibres de carbone, fibres plastiques, nanotubes de carbone (à paroi simple et/ou multiple), fillers, fibres et poudre de métal, amiante, fibres de laine de roche, fibres de quartz, substances de remplissage sous forme de poudre telles que noir de carbone, kaolin, oxyde d'aluminium, oxyde de silicium, zéolithe, poudre de charbon actif, pérowskite, brai de goudron et autres.

**4.** Procédé selon l'une quelconque des revendications précédentes, **caractérisé en ce que** le film polymère comprend des additifs polymères choisis parmi le polyéthylène, le polypropylène, le polycarbonate, le polyéthylène-téréphtalate, le polystyrène, le polyamide, la résine polyacrylique, la résine phénolique, la résine époxy, la résine novolac, le siloxane, le brai de goudron, les bitumes, les matériaux latex en caoutchouc, polychloropène ou poly(styrol-co-butadiène) ainsi que leurs mélanges.

**5.** Procédé selon l'une quelconque des revendications précédentes, **caractérisé en ce que** l'on applique en outre sur la matrice, un matériau de type poudre, feuilles ou fibres choisi parmi le noir de carbone, le noir de carbone activé, les nanotubes de carbone (à paroi simple et/ou multiple), les fillers , les fibres de carbone, les fibres de charbon actif, la poudre de charbon actif, un tamis moléculaire de carbone, la pérowskite, l'oxyde d'aluminium, l'oxyde de silicium, le SiC, le BN, une poudre de métal précieux de Pt, Pd, Au ou Ag.

**6.** Procédé selon l'une quelconque des revendications précédentes, **caractérisé en ce que** la matrice est constituée essentiellement de matières fibreuses naturelles, semi-synthétiques et/ou synthétiques et dans lequel la température de pyrolyse est choisie de telle sorte que l'objet présente après la pyrolyse, une proportion de carbone supérieure à 50 % en poids, de préférence, supérieure à 75 % en poids.

**7.** Procédé selon la revendication 6, **caractérisé en ce que** les matières fibreuses sont choisies dans le groupe des matières fibreuses naturelles constitué de cellulose, d'amylose, d'amidon, de polyoses, de lignine, de lin, de chanvre, de jute, de sisal, de fibres de coco, de kénaf, de ramie, de roselle, de chanvre sunn, d'urène, de filasse de lin, de coton, de kapok ainsi que de fibres de paille de céréales, de graminées alfa ou esparto, de fique, de henequen, de chanvre de Manille, de phormium, de bagasse, de linters, d'abaca, de fibres de pin.

**8.** Procédé selon la revendication 6, **caractérisé en ce que** les matières fibreuses sont choisies dans le groupe des matières fibreuses semi-synthétiques constitué de pâte au sulfate, pâte au sulfite, pâte à la soude, dérivés de cellulose tels que esters et éthers cellulosiques, acétate de cellulose, alginate, viscose, rayonne au cuivre, polyisoprène.

**9.** Procédé selon la revendication 6, **caractérisé en ce que** les matières fibreuses sont choisies dans le groupe des matières fibreuses synthétiques, constitué d'homo- et de co-polymères de polyacrylonitrile, d'alcool de polyvinyle, de polyéthylène, de polypropylène, de polyamide, de polyester, de polyuréthane.

**10.** Procédé selon l'une quelconque des revendications 2 à 9, **caractérisé en ce que** l'on utilise comme précurseur de céramique dans un traitement CVD et/ou CVI, du $BCl_3$, du $NH_3$, du silane ainsi que du tétraéthoxysilane (TEOS), du $SiH_4$, du dichlorodiméthylsilane (DDS), du méthyl-trichlorosilane (MTS), du trichlorosilyldichloroborane (TDADB), de l'oxyde d'hexadichlorométhylsilyle (HDMSO), de l'$AlCl_3$, du $TiCl_3$ ou leurs mélanges.

**11.** Procédé selon l'une quelconque des revendications 1 à 10, **caractérisé en ce qu'**avant la pyrolyse, la matrice est marquée d'une structure, par exemple une structure à stries, à rayures, ou réticulée et que la matrice est ensuite pliée, les plis individuels étant collés les uns aux autres de manière appropriée pour former un paquet de plis compact.

**12.** Matériau fabriqué par un procédé selon l'une quelconque des revendications 1 à 11, **caractérisé par** un volume de pores de transport entre 20 et 80 % en volume et/ou un diamètre de pores moyen entre 400 $\mu$m et 5 $\mu$m.

**13.** Matériau selon la revendication 12, **caractérisé par** une surface BET de la fraction de tamisage de 10 x 18 US-Mesh (2,00 x 1,00 mm) d'au moins 10 m$^2$/g, de préférence d'au moins 50 m$^2$/g et de manière particulièrement préférée, d'au moins 100 m$^2$/g.

**14.** Matériau selon l'une quelconque des revendications 12 ou 13, **caractérisé par** un nombre $N_2$ d'au moins 90 % dans l'essai de traversée de l'oxygène - azote.

**15.** Matériau selon l'une quelconque des revendications 12 à 14 sous la forme d'un matériau en céramique, **caractérisé par** un résidu de calcination d'au moins 90 % en poids lors d'une combustion de deux heures en présence d'oxygène à 1000° C.

**16.** Matériau fabriqué par le procédé selon la revendication 11, **caractérisé par** un intervalle moyen des plis inférieur à 15 mm, de préférence inférieur à 5 mm, en particulier de préférence entre 5 $\mu$m et 5 mm.

**17.** Utilisation du matériau selon l'une quelconque des revendications 12 à 16 comme adsorbant, membrane et/ou support de membrane.

**18.** Utilisation du matériau selon l'une quelconque des revendications 12 à 17, dans un dispositif en continu de séparation, de concentration et/ou de purification de gaz et de liquides, dans des dispositifs appropriés pour la séparation de mélanges de $O_2/N_2$, l'oxygène étant concentré dans le perméat, dans des dispositifs appropriés pour la séparation d'hydrogène à partir de mélanges contenant du $H_2$, le $H_2$ étant concentré dans le perméat, dans des dispositifs appropriés pour l'épuration de l'eau, dans des dispositifs appropriés comme filtres pour l'épuration des liquides et/ou des gaz, dans des dispositifs appropriés pour l'enrichissement en oxygène dans l'air ambiant d'espaces intérieurs et/ou comme catalyseur ou support de catalyseur.

# FIGUR 1

# FIGUR 2